# FASCICULE DE BREVET EUROPEEN

(11) **EP 3 821 425 B1**
(45) Date de publication et mention de la délivrance du brevet: **05.10.2022**
(21) Numéro de dépôt: 19782657.1
(22) Date de dépôt: 20.08.2019
(51) Int. Cl.: G10K 11/168, B60R 13/08

(54) **PANNEAU D'ATTÉNUATION ACOUSTIQUE AYANT DES PERFORMANCES AMÉLIORÉES DANS LES BASSES ET MOYENNES FRÉQUENCES**
SCHALLDÄMMPLATTE MIT VERBESSERTER LEISTUNG BEI NIEDRIGEN UND MITTLEREN FREQUENZEN
ACOUSTIC ATTENUATION PANEL WITH IMPROVED PERFORMANCE IN LOW AND MEDIUM FREQUENCIES

(30) Priorité: 27.08.2018 FR 1857684
(43) Date de publication de la demande: 19.05.2021
(73) Titulaire: ArianeGroup SAS, 78130 Les Mureaux (FR)
(72) Inventeur: TROCLET, Bernard, 75014 Paris (FR); GODART, Pierre, 27220 Foucrainville (FR)
(74) Mandataire: Brevalex
(86) Numéro de dépôt international: PCT/FR2019/051942
(87) Numéro de publication internationale: WO 2020/043978

(56) Documents cités:
- EP-A2- 2 053 593
- WO-A1-2016/124830
- FR-A1- 2 888 386
- FR-A1- 2 979 281

## Description

### DOMAINE TECHNIQUE

La présente invention se rapporte à un panneau d'atténuation acoustique destiné à être fixé à une paroi d'une pièce dont on veut réduire la transmission acoustique, afin d'augmenter la réduction du bruit traversé par ladite pièce.

Cette pièce peut notamment être une coiffe de lanceur spatial, une structure inter-étage de lanceur spatial, un fuselage d'avion, un bâtiment, un véhicule motorisé (par exemple une automobile) ou un train.

### ÉTAT DE LA TECHNIQUE ANTÉRIEURE

Les panneaux d'atténuation acoustique sont utilisés dans de nombreux domaines pour réduire les nuisances acoustiques.

Ils comprennent généralement une couche principale du type en nid d'abeille ou en matériau poreux, ainsi qu'une couche de revêtement recouvrant l'une des deux faces opposées de la couche principale (en l'occurrence la face côté onde sonore incidente), ces deux couches étant collées l'une sur l'autre à l'aide d'un film adhésif. Le panneau est destiné à être fixé sur la paroi de la pièce dont on veut réduire la transmission acoustique, la fixation se faisant par l'autre des deux faces de la couche principale du panneau.

La couche principale et la couche de revêtement ont pour fonction de contribuer à l'absorption acoustique du panneau; elles sont donc en des matériaux d'absorption acoustique.

La couche de revêtement est en outre perméable à l'air (il peut par exemple s'agir d'une peau perforée). Elle a également pour fonction, dans certains cas d'utilisation induisant des changements de pression, de permettre la dépressurisation de l'air emprisonné dans les alvéoles ou cavités de la couche principale comme, par exemple, la dépressurisation en vol de l'air emprisonné au sol dans les alvéoles ou cavités.

Dans certains cas particuliers, les panneaux d'atténuation acoustique doivent en outre être conçus pour être installés en zone chaude d'une structure. Ils doivent donc, en plus de réduire la transmission du bruit, résister à la chaleur.

C'est notamment le cas des lanceurs spatiaux, qui sont soumis à un environnement acoustique sévère au décollage, en raison de l'émission de jets supersoniques des propulseurs à poudre et de leur impact sur le pas de tir, ainsi qu'à des températures élevées lors des phases de vol. La transparence acoustique des pièces de type sandwich de la partie supérieure des lanceurs conduit à des niveaux acoustiques élevés à l'intérieur du compartiment des charges utiles du lanceur, dans le domaine basse fréquence jusqu'au domaine haute fréquence (fréquences inférieures à 2000 Hz).

Rappelons à ce sujet que les niveaux acoustiques spécifiés dans le manuel d'utilisateur du lanceur ARIANE 5 sont respectivement de 131 dB et 136 dB dans les bandes d'octave de fréquence 63 Hz et 125 Hz. Les niveaux acoustiques induits appliqués aux charges utiles dans ces gammes de fréquences sont dimensionnants, en particulier pour les équipements du satellite, notamment les réflecteurs d'antenne puisque les réflecteurs sont légers et ont leurs premiers modes de vibration dans ces bandes de fréquence.

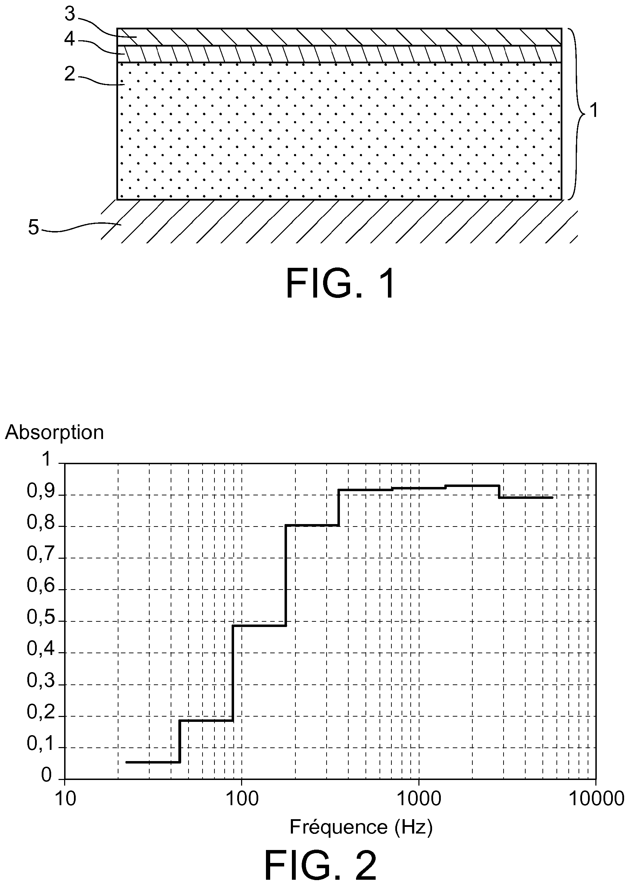

La solution retenue pour le lanceur ARIANE 5 en termes d'atténuation du bruit est un panneau acoustique dont le coefficient d'absorption acoustique en fonction de la fréquence est illustré dans la figure 2. Ce panneau comprend, comme couche principale, un corps en mousse de résine de mélamine de 10 cm d'épaisseur ayant une masse surfacique de 1026 g/cm², un tissu comme couche de revêtement, et un film adhésif pour l'assemblage de la couche de revêtement sur la couche principale. Comme on peut le constater, le coefficient d'absorption acoustique de ce panneau est inférieur à 0,2 dans la bande d'octave de fréquence 63 Hz et est inférieur à 0,5 à 125 Hz. Ainsi, le coefficient d'absorption acoustique est trop faible dans les plages de basses et moyennes fréquences, en particulier dans les bandes d'octave 63 Hz et 125 Hz.

FR 2 979 281 A1 divulgue un panneau acoustique comportant plusieurs couches, assemblées par un film adhésif.

Les inventeurs ont cherché à améliorer les performances d'atténuation acoustique afin de concevoir un panneau qui ait des capacités d'absorption acoustique plus performantes dans les plages de basses et moyennes fréquences, sans que ses performances acoustiques à des fréquences plus élevées ne soient dégradées, et tout en diminuant le poids du panneau.

### EXPOSÉ DE L'INVENTION

Pour répondre à ce besoin, l'invention a tout d'abord pour objet un panneau d'atténuation acoustique comprenant :
- une première couche, dite couche principale, en un matériau poreux et ayant deux faces opposées ;
- une deuxième couche, dite couche de revêtement, disposée sur l'une des deux faces de la couche principale ;
- un film adhésif disposé à l'interface entre la couche principale et la couche de revêtement, la couche principale et la couche de revêtement étant assemblées l'une avec l'autre par le film adhésif, le film adhésif étant un film muni de trous traversants et ayant une masse surfacique comprise entre 40 g/m² et 56 g/m² ;

le panneau étant caractérisé en ce que la couche principale est un corps en mousse de résine de mélamine ayant une masse volumique comprise entre 6 et 6,8 kg/m³ et un taux de porosité compris entre de 0,978 et 0,984 ;
en ce que la couche de revêtement est un tissu ayant une masse volumique comprise entre 484 et 526 kg/m³ et un taux de porosité compris entre de 0,771 et 0,817 ;
et en ce que le film adhésif est un film en un matériau thermoplastique.

De préférence, la couche principale en mousse de résine de mélamine et la couche de revêtement sont assemblées l'une sur l'autre par laminage en utilisant un film adhésif. En d'autres termes, le film adhésif est positionné entre la couche principale et la couche de revêtement, puis l'empilement ainsi obtenu est ensuite traité thermiquement afin de provoquer la polymérisation de la résine du film adhésif et d'accroitre la résistivité de l'ensemble.

Dans le présent exposé de l'invention, l'expression « compris entre ... et ... » doit être comprise comme incluant les bornes.

De préférence, la couche principale a une épaisseur comprise entre 9,5 cm et 11 cm, de préférence égale à 10,16 cm.

De préférence, la couche de revêtement a une résistivité comprise entre 2021988 et 2471130 N.s/m⁴ et une résistance au passage de l'air (RPA) comprise entre 707 et 865 N.s/m³.

De préférence, la couche de revêtement a une épaisseur inférieure à 1 mm.

Selon un mode de réalisation de l'invention, la couche de revêtement est un tissu réalisé à partir d'un fil mixte composé de fibres de polyester et de fibres de coton, le rapport de mélange des fibres de polyester et des fibres de coton étant de préférence de 50/50.

La mélamine est un composé de formule chimique 1,3,5-triazine-2,4,6-triamine C₃H₆N₆. Elle est notamment utilisée pour synthétiser des polymères sous forme de mousse ; le résultat de cette synthèse est alors qualifié de mousse de résine de mélamine.

Il existe de nombreuses mousses de résine de mélamine, selon le ou les polymères qui sont utilisés avec la mélamine.

Les mousses de résine de mélamine ont une structure alvéolaire à cellules ouvertes et sont donc efficaces pour absorber les ondes acoustiques. Le choix de la mousse de résine de mélamine se fait en fonction de la destination du panneau (zone chaude d'une structure ou non), de sa masse et ses capacités d'atténuation acoustique.

De préférence, la mousse de résine de mélamine formant la couche principale est un copolymère de formaldéhyde, de mélamine et de bisulfite de sodium. Préférentiellement, la mousse de résine de mélamine a une résistivité comprise entre 9752 et 11196 N.s/m⁴ et une résistance au passage de l'air (RPA) comprise entre 990,7 et 1137,3 N.s/m³.

La couche de revêtement est destinée à être disposée côté onde sonore incidente. Elle est destinée à être au contact de l'écoulement aérodynamique ou du milieu gazeux dans lequel se déplacent les ondes sonores à amortir. À titre d'exemple, elle est destinée à être au contact de la cavité interne de la coiffe d'un lanceur, afin de réduire l'environnement acoustique par absorption. La couche de revêtement est un tissu et est donc perméable à l'air. On entend par tissu un matériau tissé qui comporte des fils de trame et des fils de chaîne qui s'entrecroisent.

Dans la présente invention, le film adhésif contribue également, comme la couche principale et la couche de revêtement, à l'absorption acoustique du panneau.

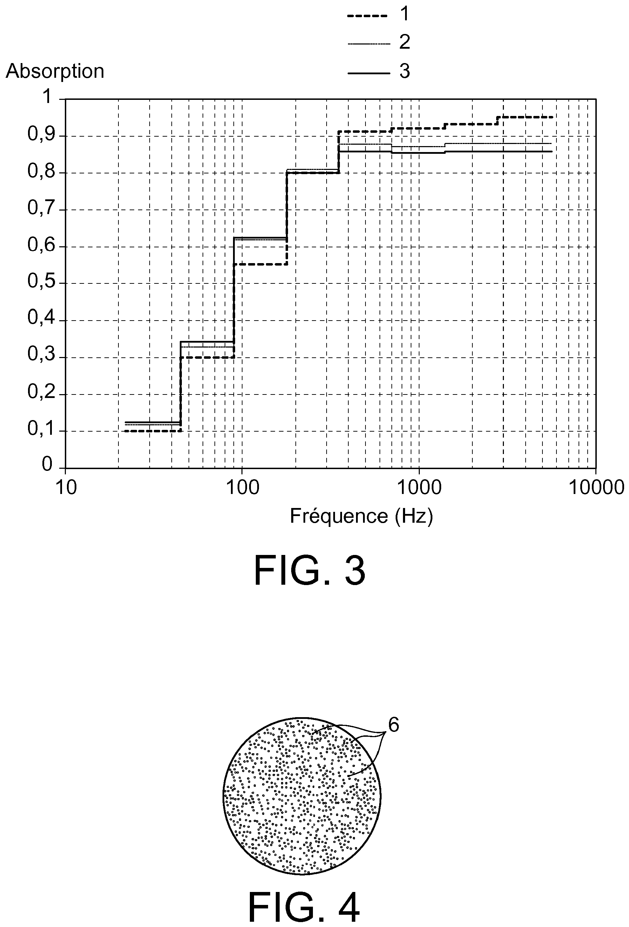

Le film adhésif comporte des trous traversants, qui permettent notamment une dépressurisation du panneau, utile lorsque le panneau est par exemple installé sur une structure type coiffe de lanceur spatial, sur une structure inter-étages ou encore sur une carlingue d'avion. De préférence, le film adhésif a une forme en toile d'araignée. Une forme possible de toile d'araignée est représentée dans la figure 4. Dans cette forme en toile d'araignée, le film comporte des trous traversants 6 de diamètres différents et dispersés de manière aléatoire. Dans la figure 4, les parties foncées représentent les trous traversants 6.

De préférence, le film adhésif a une épaisseur comprise entre 0,16 et 0,20 mm.

Selon un mode de réalisation de l'invention, le film adhésif a, outre une épaisseur comprise entre 0,16 et 0,20 mm, une température de fusion comprise entre 180 et 190°C. De préférence, le film adhésif a en outre une calorimétrie différentielle à balayage comprise entre 175°C et 185°C et un indice de fluidité à chaud en volume inférieur à 2 cm³/10 min.

La température de fusion du film adhésif est mesurée par point de fusion par banc de Kofler; la calorimétrie différentielle à balayage (ou DSC pour « differential scanning calorimetry » en anglais) est mesurée selon la norme ISO 11357 ; l'indice de fluidité à chaud en volume (MVR) est mesuré selon la norme ISO 1133-1.

Selon une variante préférée de l'invention, les éléments du panneau ont les caractéristiques suivantes :
- la couche principale (2) est un corps en mousse de résine de mélamine ayant une masse surfacique comprise entre 600 g/m² et 680 g/m² de préférence égale à 650 g/m², et une épaisseur comprise entre 9,5 cm et 11 cm ;
- la couche de revêtement (3) est un tissu ayant une masse surfacique comprise entre 110 et 130 g/cm², de préférence égale à 120,75 g/cm², et une épaisseur comprise entre 0,3 et 0,4 mm, de préférence égale à 0,35 mm ;
- le film adhésif (4) a une masse surfacique comprise entre 40 g/m² et 56 g/m², de préférence égale à 52 g/m².

Le panneau d'atténuation acoustique selon l'invention peut être utilisé dans de nombreux domaines où la réduction des nuisances acoustiques est recherchée, comme par exemple, dans les domaines spatial et aéronautique (lanceurs spatiaux, avions, hélicoptères, etc.), mais également dans l'industrie automobile, navale, ferroviaire (les trains à grande vitesse), dans les bâtiments.

Ainsi, l'invention concerne également une pièce ayant une paroi sur laquelle est fixé un panneau tel que défini selon l'invention, cette pièce étant choisie parmi une coiffe de lanceur spatial, une structure inter-étage de lanceur spatial, un fuselage d'un avion, un bâtiment, un véhicule motorisé (par exemple une automobile) et un train.

Dans le cadre de l'invention, les épaisseurs indiquées sont mesurées par la technique du pied à coulisse pour la mousse et à l'aide d'un micromètre pour le tissu. L'épaisseur de la colle n'est pas directement mesurée : elle est déterminée à partir de la mesure du panneau une fois obtenu et en soustrayant celle du tissu et de la mousse.

Les résistivités sont mesurées par la technique de la résistivité d'un flux d'air statique, par exemple en utilisant un appareil de mesure de la résistivité (SIGMA Airflow Résistance Meter) de la marque Mecanum (Canada-Québec). Cette technique est décrite dans les normes ASTM C522-03 et ISO-9053-91.

La porosité et la masse volumique sont mesurées selon la méthode de la masse manquante, publiée dans le Journal of Applied Physics 101 (12), 2007*.* On peut par exemple utiliser un appareil de mesure de la densité et de la porosité (« porosity/density meter ») de la marque Mecanum (Canada-Québec).

La tortuosité est mesurée selon méthode de mesure par transmission suivant la théorie de Biot, à l'aide par exemple d'un appareil de mesure de la tortuosité (« tortuosity meter ») de la marque Mecanum (Canada-Québec).

Les mesures d'absorption acoustique suivent les standards ASTM E1050 et ISO 10534-2 ; elles peuvent être effectuées à l'aide d'un tube à impédance (diamètre 100 mm), par exemple de la marque Mecanum (Canada-Québec).

### BRÈVE DESCRIPTION DES DESSINS

D'autres avantages et caractéristiques de l'invention apparaîtront mieux à la lecture de la description détaillée suivante de formes de réalisation préférées de celle-ci, donnée à titre d'exemple non limitatif, et faite en référence aux dessins annexés parmi lesquels :
- la figure 1 représente un panneau d'atténuation acoustique selon l'invention, selon une vue en coupe, disposé contre une paroi ;
- la figure 2 représente le coefficient d'absorption acoustique en fonction des fréquences, du panneau d'absorption acoustique selon l'art antérieur utilisé dans ARIANE 5 ;
- la figure 3 représente le coefficient d'absorption acoustique en fonction de la fréquence du panneau d'absorption acoustique réalisé selon un mode de réalisation préféré de l'invention ;
- la figure 4 est une représentation schématique, selon une vue de dessus, d'un film adhésif en toile d'araignée.

Il est précisé que les différents éléments dans la figure 1 ne sont pas représentés à l'échelle.

### EXPOSÉ DÉTAILLÉ DE MODES DE RÉALISATION PARTICULIERS

Dans la figure 1 est représenté un panneau 1 d'atténuation acoustique selon l'invention. Il comporte une couche principale 2 en un matériau poreux, une couche de revêtement 3 et un film adhésif 4.

Le panneau 1 est représenté positionné contre une paroi 5 d'une structure. Il peut par exemple s'agir de la paroi interne d'une coiffe de lanceur spatial.

Le panneau peut être intégré à la paroi lors de la conception de la structure ou bien être ajouté par la suite.

Les inventeurs ont cherché à optimiser les caractéristiques du panneau de l'art antérieur, utilisé dans la cavité de charge utile du lanceur spatial ARIANE 5, présentant un profil d'absorption tel qu'illustré dans la figure 2. Plus précisément, les inventeurs ont cherché à concevoir un panneau ayant un coefficient d'absorption acoustique d'au moins 0,3 à 63 Hz et d'au moins 0,55 à 125 Hz. L'obtention d'un coefficient de 0,3 à 63 Hz permettrait en effet de réduire la pression dans la bande d'octave de la fréquence centrale 63 Hz à l'intérieur de la cavité de charge utile d'un facteur de 1,25 (soit une réduction de 2 dB par rapport à la solution de référence du lanceur Ariane 5).

Pour ce faire, les inventeurs ont notamment utilisé, comme matériau poreux pour la couche principale d'absorption acoustique, une mousse de résine de mélamine ayant les caractéristiques indiquées dans le tableau 1 ci-dessous.

**Tableau 1 : caractéristiques de la mousse de résine de mélamine et du tissu laminé utilisés dans un mode de réalisation préféré de l'invention**

| | Mousse de résine de mélamine ULb | | Tissu 11689C avec effet de laminage | |
|---|---|---|---|---|
| Paramètres | Valeur | Ecart Type | Valeur | Ecart Type |
| Taux de porosité | 0,981 | 0,003 | 0,794 | 0,023 |
| Résistivité (N.s.m⁻⁴) | 10474 | 722 | 2246559 | 224571 |
| RPA (N.s.m⁻³) | 1064 | 73,3 | 786 | 79 |
| Tortuosité | 1 | 0 | 1 | 0 |
| Longueur caractéristique visqueuse (µm) | 99,1 | 12,3 | 1 | 0 |
| Longueur caractéristique thermique (µm) | 149,7 | 10,9 | 70 | 0,2 |
| Masse volumique (kg/m³) | 6,4 | 0,4 | 505 | 21 |
| Module de Young (Pa) | 117,4 | 11,7 | - | - |
| Coefficient de Poisson | 0,41 | 0,07 | - | - |
| Isolation phonique | 0,053 | 0,008 | - | - |

Le choix parmi les mousses de résine de mélamine existantes se fait en fonction des contraintes de températures auxquelles le panneau doit résister, ainsi qu'aux contraintes de masse et, bien évidemment aux atténuations acoustiques à atteindre.

Il en est de même pour le tissu et le film adhésif, le choix s'effectuant en fonction des contraintes de températures, de masse et d'atténuation acoustique. À ce sujet, on précise que les caractéristiques du « tissu 11689C avec effet de laminage » indiquées dans le tableau 1 ci-dessus correspondent aux caractéristiques de ce tissu après qu'il ait subi une étape de laminage avec un film d'adhésif.

À titre d'exemple, pour une utilisation du panneau dans une coiffe de lanceur spatial, les différents éléments du panneau doivent réussir les tests de qualification de l'environnement spatial, à savoir les spécifications ESA (pour « European cooperation for Space Standardization » en anglais).

Le tableau 2 ci-dessous regroupe quelques références ESA et le sujet auquel chaque référence se rapporte.

**Tableau 2 : quelques références ESA**

| Référence | Sujet (et son équivalent en anglais) |
|---|---|
| ECSS-E-ST -10C | Exigences générales d'ingénierie système (« System engineering general requirements ») |
| ESSS-Q-ST-70-71C | Matériaux, procédés et leurs sélections (« Materials, processes and their selection ») |
| ECSS-E-HB-31-01 Part 5A | Manuel de conception thermique (« Thermal design handbook ») |
| ECSS-E-HB-32-20 Part 1A | Manuel des matériaux de construction (« Structural materials handbook ») |
| ECSS-E-HB-32-21A | Manuel de conception d'adhésif (« Adhesive design handbook ») |
| ECSS-E-ST -10-06C | Specifications techniques (« Technical requirements specification ») |
| ECSS-E-ST-32C | Exigences structurelles générales (« Structural general requirements ») |
| ECSS-E-ST -08C | Matériaux (« Materials ») |

La mousse de résine de mélamine fabriquée par la société BASF sous la dénomination Basotect^{™} convient à une utilisation dans une coiffe de lanceur spatial, une carlingue d'avion, un train ou un bâtiment, car elle a un classement au feu M1 (produit non inflammable). Cette mousse de résine de mélamine particulière est un copolymère de formaldéhyde, de mélamine et de bisulfite de sodium.

Le panneau selon le mode de réalisation préférée de l'invention comporte une couche de mélamine Basotect^{™} portant la référence « UltraLight b » (ou ULb), ayant une épaisseur de 4 inches (soit 10,16 cm) et les caractéristiques indiquées dans le tableau 1 ci-dessus.

La mélamine dite « UltraLight b » est une mousse dérivée de la mélanine actuellement utilisée dans l'industrie spatiale, mais elle est 30% plus légère que la Basotect^{™} classique.

Selon un mode de réalisation préféré, et afin de limiter le poids du panneau, les inventeurs ont choisi d'utiliser, comme couche de revêtement, le tissu ayant des caractéristiques indiquées dans le tableau 1 et une épaisseur inférieure à 1 mm.

Les inventeurs ont choisi un textile tissé (ou tissu) pour la couche de revêtement, car les textiles non tissés ont, pour la plupart, leurs fibres qui sont liées entre elles par une résine thermoplastique qui ne supporte pas une température de 160°C.

En l'occurrence, le textile tissé utilisé dans le mode de réalisation préféré est celui fabriqué par la société Victor Textile, située au Canada, sous la référence 11689C. Il comporte les caractéristiques indiquées dans le tableau 1 et une épaisseur de 0,35 mm, et il est réalisé à partir d'un fil continu texturé d'un mélange de fibres polyester/coton (50/50).

Le textile tissé de référence 11689C de chez Victor Textile présente bien un coefficient d'absorption acoustique d'au moins 0,3 à 63 Hz et d'au moins 0,55 à 125 Hz. En outre, il est léger (masse surfacique moyenne de 120,75 g/cm²) et il présente une surface sensiblement lisse (plus précisément, il a peu de relief de surface et il n'y a pas de fibres libres en surface), ce qui présente l'avantage d'assurer une meilleure adhérence avec la mousse. En outre, comme il n'y a pas de fibres libres sur la surface de la couche de revêtement, cela évite, dans le cas particuliers de coiffes de lanceurs spatiaux, l'émission de particules lors de la ventilation forcée sous coiffe du lanceur et lors de la phase de séparation/éloignement du lanceur des demi-coiffes.

Afin d'assurer un bon maintien de la couche de revêtement (tissu) sur la couche principale (mousse) et d'augmenter la résistance au flux d'air du panneau d'atténuation acoustique, ces deux éléments sont collés l'un sur l'autre par un procédé de laminage en plaçant un film adhésif en matériau thermoplastique à leur interface.

Le film adhésif va donc permettre le collage de ces deux éléments, mais il participe également à l'atténuation acoustique. Il est choisi de manière à ce qu'il comporte des trous traversants pour à la fois permettre à l'air de s'échapper et pour participer à la performance en absorption acoustique du panneau. De préférence, le film adhésif a une forme de toile d'araignée (« web » en anglais), dont un exemple est illustré dans la figure 4. En l'occurrence, nous avons utilisé un adhésif thermofusible de la société Protechnic.

La société Protechnic propose des films adhésifs thermofusibles portant la dénomination Thermoplast^{™} et disponibles sous forme de films pleins ou présentant des découpes selon différents motifs (sous forme de bandes, d'hexagones, etc.) formant par exemple des réseaux (« nets » en anglais) ou des toiles d'araignée (« webs » en anglais).

Dans le mode de réalisation préféré, nous avons utilisé un film thermoplastique portant la référence BB8, qui a un motif « web » (filaments superposés donnant l'impression d'une toile d'araignée avec des découpes sous forme de trous de différents diamètres irrégulièrement placés) et qui répond aux exigences des tests de qualification de l'environnement thermo-mécanique spatial ESA (dont les références sont indiquées dans le tableau 2 ci-dessus), en étant apte à résister à une température de 185°C.

Des tests ont été réalisés en variant la densité du film thermoplastique.

Un premier panneau a été réalisé en utilisant un film ayant une masse surfacique de 40 g/m² et un deuxième panneau a été réalisé en utilisant un film ayant une masse surfacique de 56 g/m². Les résultats d'absorption acoustique obtenus pour un panneau réalisé avec les films de 40 g/m² (courbe 2) et 56 g/m2 (courbe 3) sont représentés dans la figure 3 (la courbe 1 représentant l'objectif d'atténuation acoustique à atteindre ; on constate que l'atténuation acoustique est supérieure à celle du panneau de l'art antérieur utilisé dans le lanceur d'Ariane 5 et présenté dans la figure 2). L'absorption optimale est obtenue par interpolation avec une masse surfacique de 52 g/m².

En comparant les performances acoustiques du panneau de l'art antérieur utilisé dans ARIANE 5 et celles du panneau réalisé selon le mode de réalisation préféré de l'invention, on constate que l'absorption acoustique est améliorée dans les bandes de basses fréquences avec une perte acceptable aux hautes fréquences. Plus particulièrement, on constate que le panneau selon l'invention satisfait aux conditions ciblées d'absorption sonore de 0,3 et 0,55 respectivement à 63 Hz et 125 Hz, puisqu'il fournit une absorption acoustique de 0,35 à 63 Hz et de 0,62 à 125 Hz. Ces absorptions acoustiques sont supérieures à celles fournies par le panneau de référence de l'art antérieur (voir la courbe dans la figure 2), et sont notamment supérieures de sensiblement un facteur 2 dans la bande de fréquence de la fréquence centrale 63 Hz, qui est une bande de fréquence critique pour les lanceurs spatiaux. Ce facteur 2 conduit à une réduction du bruit à l'intérieur du carénage d'un lanceur de 3 dB.

Le panneau ainsi réalisé satisfait aux exigences difficiles en termes d'absorption acoustique dans les bandes de basses et moyennes fréquences, sans que ses performances acoustiques ne soient dégradées à des fréquences plus élevées.

En outre, le panneau selon l'invention, pour une même épaisseur de matériau d'absorption acoustique en mousse de résine de mélamine, est plus léger de 30% par rapport à celui de l'art antérieur. Le fait d'avoir diminué le poids du panneau a pour avantage d'améliorer les performances en masse d'emport de charge utile du lanceur sur lequel il est destiné à être appliqué.

Nous venons de décrire un panneau adapté à une utilisation dans une coiffe de lanceur spatial. Mais il est bien entendu que le panneau selon l'invention peut être adapté pour une utilisation dans toutes sortes de structures, comme par exemple dans un fuselage d'avion, dans une voiture d'un train à grande vitesse, dans un bâtiment, etc.

## Revendications

1. Panneau (1) d'atténuation acoustique comprenant :
- une première couche, dite couche principale (2), en un matériau poreux et ayant deux faces opposées ;
- une deuxième couche, dite couche de revêtement (3), disposée sur l'une des deux faces de la couche principale ;
- un film adhésif (4) disposé à l'interface entre la couche principale et la couche de revêtement, la couche principale (2) et la couche de revêtement (3) étant assemblées l'une avec l'autre par le film adhésif, le film adhésif étant un film muni de trous traversants (6) et ayant une masse surfacique comprise entre 40 g/m² et 56 g/m² ;
le panneau étant **caractérisé en ce que** la couche principale (2) est un corps en mousse de résine de mélamine ayant une masse volumique comprise entre 6 et 6,8 kg/m³ et un taux de porosité compris entre de 0,978 et 0,984 ;
**en ce que** la couche de revêtement est un tissu ayant une masse volumique comprise entre 484 et 526 kg/m³ et un taux de porosité compris entre de 0,771 et 0,817 ;
et **en ce que** le film adhésif est un film en un matériau thermoplastique.

2. Panneau selon la revendication 1, dans lequel la couche principale a une épaisseur comprise entre 9,5 cm et 11 cm.

3. Panneau selon la revendication 1 ou la revendication 2, dans lequel la couche de revêtement a une résistivité comprise entre 2021988 et 2471130 N.s/m⁴ et une résistance au passage de l'air (RPA) comprise entre 707 et 865 N.s/m³.

4. Panneau selon la revendication 3, dans lequel la couche de revêtement a une épaisseur inférieure à 1 mm.

5. Panneau selon l'une quelconque des revendications 1 à 4, dans lequel la couche de revêtement est un tissu réalisé à partir d'un fil mixte composé de fibres de polyester et de fibres de coton, le rapport de mélange des fibres de polyester et des fibres de coton étant de préférence de 50/50.

6. Panneau selon l'une quelconque des revendications 1 à 5, dans lequel la mousse de résine de mélamine formant la couche principale est un copolymère de formaldéhyde, de mélamine et de bisulfite de sodium.

7. Panneau selon la revendication 6, dans lequel la mousse de résine de mélamine a une résistivité comprise entre 9752 et 11196 N.s/m⁴ et une résistance au passage de l'air (RPA) comprise entre 990,7 et 1137,3 N.s/m³.

8. Panneau selon l'une quelconque des revendications 1 à 7, dans lequel le film adhésif (4) a une épaisseur comprise entre 0,16 et 0,20 mm.

9. Panneau selon la revendication 8, dans lequel le film adhésif (4) a une température de fusion comprise entre 180 et 190°C.

10. Panneau selon l'une quelconque des revendications 1 à 9, dans lequel :
- la couche principale (2) a une masse surfacique comprise entre 600 g/m² et 680 g/m² de préférence égale à 650 g/m² ;
- la couche de revêtement (3) est un tissu ayant une masse surfacique comprise entre 110 et 130 g/cm², de préférence égale à 120,75 g/cm², et une épaisseur comprise entre 0,3 et 0,4 mm ;
- le film adhésif (4) a une masse surfacique égale à 52 g/m².

11. Pièce ayant une paroi sur laquelle est fixé un panneau tel que défini selon l'une quelconque des revendications 1 à 10, ladite pièce étant choisie parmi une coiffe de lanceur spatial, une structure inter-étage de lanceur spatial, un fuselage d'un avion, un bâtiment, un véhicule motorisé et un train.

## Patentansprüche

1. Schalldämmplatte (1), enthaltend:
- eine erste Schicht, Hauptschicht (2) genannt, aus einem porösen Material und mit zwei entgegengesetzten Seiten;
- eine zweite Schicht, Deckschicht (3) genannt, die auf einer der beiden Seiten der Hauptschicht angeordnet ist;
- einen Klebefilm (4), der an der Grenzfläche zwischen Hauptschicht und Deckschicht angeordnet ist, wobei die Hauptschicht (2) und die Deckschicht (3) durch den Klebefilm zusammengefügt sind, wobei der Klebefilm ein Film der mit Durchgangslöchern (6) versehen ist und eine flächenbezogene Masse zwischen 40 g/m² und 56 g/m² hat;
wobei die Platte **dadurch gekennzeichnet ist, dass** die Hauptschicht (2) ein Körper aus Melaminharz-Schaumstoff mit einer Massendichte zwischen 6 und 6,8 kg/m³ und einem Porositätsgrad zwischen 0,978 und 0,984 ist;
dass die Deckschicht ein Gewebe mit einer Massendichte zwischen 484 und 526 kg/m³ und einem Porositätsgrad zwischen 0,771 und 0,817 ist;
und dass der Klebefilm ein Film aus einem thermoplastischen Material ist.

2. Platte nach Anspruch 1, wobei die Hauptschicht eine Dicke zwischen 9,5 cm und 11 cm aufweist.

3. Platte nach Anspruch 1 oder Anspruch 2, wobei die Deckschicht einen spezifischen Widerstand zwischen 2021988 und 2471130 N.s/m⁴ und einen Luftdurchlasswiderstand (RPA) zwischen 707 und 865 N.s/m³ aufweist.

4. Platte nach Anspruch 3, wobei die Deckschicht eine Dicke von weniger als 1 mm aufweist.

5. Platte nach einem der Ansprüche 1 bis 4, wobei die Deckschicht ein Gewebe ist, das aus einem Mischgarn aus Polyesterfasern und Baumwollfasern hergestellt ist, wobei das Mischungsverhältnis von Polyesterfasern und Baumwollfasern vorzugsweise 50/50 beträgt.

6. Platte nach einem der Ansprüche 1 bis 5, wobei der Melaminharz-Schaumstoff, der die Hauptschicht bildet, ein Copolymer aus Formaldehyd, Melamin und Natriumbisulfit ist.

7. Platte nach Anspruch 6, wobei der Melaminharz-Schaumstoff einen spezifischen Widerstand zwischen 9752 und 11196 N.s/m⁴ und einen Luftdurchlasswiderstand (RPA) zwischen 990,7 und 1137,3 N.s/m³ aufweist.

8. Platte nach einem der Ansprüche 1 bis 7, wobei der Klebefilm (4) eine Dicke zwischen 0,16 und 0,20 mm aufweist.

9. Platte nach Anspruch 8, wobei der Klebefilm (4) eine Schmelztemperatur zwischen 180 und 190 °C hat.

10. Platte nach einem der Ansprüche 1 bis 9, wobei:
- die Hauptschicht (2) eine flächenbezogene Masse zwischen 600 g/m² und 680 g/m², vorzugsweise gleich 650 g/m² hat,
- die Deckschicht (3) ein Gewebe mit einer flächenbezogenen Masse zwischen 110 und 130 g/cm², vorzugsweise gleich 120,75 g/cm², und einer Dicke zwischen 0,3 und 0,4 mm ist;
- der Klebefilm (4) eine flächenbezogene Masse gleich 52 g/m² hat.

11. Teil mit einer Wand, an die eine Platte nach einem der Ansprüche 1 bis 10 befestigt ist, wobei das Teil ausgewählt ist aus einer Haube einer Trägerrakete, einer Zwischenstufenstruktur einer Trägerrakete, einem Flugzeugrumpf, einem Gebäude, einem motorisierten Fahrzeug und einem Zug.

## Claims

1. Acoustic attenuation panel (1) comprising:
- a first layer, so-called main layer (2), made of a porous material and having two opposite faces;
- a second layer, so-called coating layer (3), disposed on one of the two faces of the main layer;
- an adhesive film (4) disposed at the interface between the main layer and the coating layer, the main layer and the coating layer being assembled together with the adhesive film, the adhesive film being a film provided with through holes (6) and having a surface density between 40 g/m² and 56 g/m²;
the panel being **characterised in that** the main layer (2) is a body made of melamine resin foam having a density between 6 and 6.8 kg/m³ and a porosity rate between 0.978 and 0.984;
**in that** the coating layer is a fabric having a density between 484 and 526 kg/m³ and a porosity rate between 0.771 and 0.817;
and **in that** the adhesive film is a film made of a thermoplastic material.

2. Panel according to claim 1, wherein the main layer has a thickness between 9.5 cm and 11 cm.

3. Panel according to claim 1 or claim 2, wherein the coating layer has a resistivity between 2,021,988 and 2,471,130 N.s/m⁴ and an airflow resistance (AFR) between 707 and 865 N.s/m³.

4. Panel according to claim 3, wherein the coating layer has a thickness less than 1 mm.

5. Panel according to any one of claims 1 to 4, wherein the coating layer is a fabric produced from a mixed yarn consisting of polyester fibres and of cotton fibres, the mixture ratio of polyester fibres and of cotton fibres being preferably of 50/50.

6. Panel according to any one of claims 1 to 5, wherein the melamine resin foam forming the main layer is a formaldehyde, melamine and sodium bisulphite copolymer.

7. Panel according to claim 6, wherein the melamine resin foam has a resistivity between 9,752 and 11,196 N.s/m⁴ and an airflow resistance (AFR) between 990.7 and 1,137.3 N.s/m³.

8. Panel according to any one of claims 1 to 7, wherein the adhesive film (4) has a thickness between 0.16 and 0.20 mm.

9. Panel according to claim 8, wherein the adhesive film (4) has a melting temperature between 180°C and 190°C.

10. Panel according to any one of claims 1 to 9, wherein:
- the main layer (2) has a surface density between 600 g/m² and 680 g/m² preferably equal to 650 g/m²;
- the coating layer (3) is a fabric having a surface density between 110 and 130 g/cm², preferably equal to 120.75 g/cm², and a thickness between 0.3 and 0.4 mm;
- the adhesive film (4) has a surface density equal to 52 g/m².

11. Part having a wall whereon a panel is attached such as defined according to any one of claims 1 to 10, said part being chosen from a space launcher nose cone, a space launcher inter-stage structure, a fuselage of an aircraft, a building, a motorised vehicle and a train.
